# EUROPEAN PATENT APPLICATION

(11) **EP 2 804 079 A1**
(43) Date of publication of application: **19.11.2014**
(21) Application number: 13305636.6
(22) Date of filing: 17.05.2013
(51) Int. Cl.: G06F 3/0354, G06F 1/16

(54) **User equipment and method**

(71) Applicant: ALCATEL LUCENT, 92100 Boulogne-Billancourt (FR)
(72) Inventor: Franck, Franck, Dublin, 15 (IE); Jul, Eric, Dublin, 15 (IE)
(74) Representative: Leppard, Andrew John

(57) **Abstract**

User equipment and a method are disclosed. The user equipment is operable to execute a software application, the user equipment comprises: an elongate, touch-sensitive input device positioned away from a display screen of the user equipment, the input device being operable to generate control signals for controlling the software application in response to an interaction between the input device and a user. By providing an elongate input device which is touch-sensitive, the range of possible interactions is greater than would be possible with a conventional track pad, track ball or scroll wheel. Also, being elongate, the input device can be located at any of a number of convenient locations, without occupying a large amount of area. Furthermore, because the device is touch-sensitive, the reliability of the device is improved and the integrity of the user equipment is increased since such input devices are generally solid state and therefore are waterproof and dustproof. Also, by positioning the input device away from the display screen, any obstruction of the display screen when performing such interactions is minimised.

## Description

### FIELD OF THE INVENTION

The present invention relates to user equipment and a method.

### BACKGROUND

User equipment are known. Examples of such user equipment include Smart phones, e-book readers, tablets or any portable device with a screen. As the range of functions provided by software applications running on these user equipment increases, the range of user interactions required to perform those functions also increases. Whilst existing techniques endeavour to assist the user in performing those interactions, such interactions can become increasingly difficult to perform, particularly on small devices. Accordingly, it is desired to provide an improved technique for enabling a user to interact with user equipment.

### SUMMARY

According to a first aspect, there is provided user equipment operable to execute a software application, the user equipment comprising: an elongate, touch-sensitive input device positioned away from a display screen of the user equipment, the input device being operable to generate control signals for controlling the software application in response to an interaction between the input device and a user. The first aspect recognises that the advent of user equipment such as, for example, touch-screen Smart phones has brought with it a whole new paradigm for how to interact with these devices. Taps, swipes, gestures, pinches and double taps all accomplish different tasks. Common to all these techniques, however, is that either the application must reserve precious screen real estate for widgets that the user can interact with, or the user must place their fingers directly on top of the on-screen data that they are interacting with, thus obstructing the view.

Accordingly, user equipment for executing a software application is provided. The user equipment may comprise an elongate or extended, touch-sensitive or touch-responsive input device which may be positioned or located so that it is spaced away from a display screen of the user equipment. The input device may generate one or more control signals which control the software application in response to an interaction or contact between the input device and a user. By providing an elongate input device which is touch-sensitive, the range of possible interactions is greater than would be possible with a conventional track pad, track ball or scroll wheel. Also, being elongate, the input device can be located at any of a number of convenient locations, without occupying a large amount of area. Furthermore, because the device is touch-sensitive, the reliability of the device is improved and the integrity of the user equipment is increased since such input devices are generally solid state and therefore are waterproof and dustproof. Also, by positioning the input device away from the display screen, any obstruction of the display screen when performing such interactions is minimised.

In one embodiment, the interaction comprises the user touching the input device. Accordingly, the input device may be operated by simply being touched directly by the user. This obviates the need for any interaction device such as a pen or stylus, which significantly improves the operability of the user equipment.

In one embodiment, the input device is operable to generate the control signals in response to the user touching the input device along its length. Accordingly, control signals may be generated as a result of the user touching the input device at positions along its length.

In one embodiment, the input device is operable to generate a plurality of control signals in response to the user touching the input device at a corresponding plurality of different locations along its length. Accordingly, any of a number of different control signals may be generated, each of which is associated with the input device being touched by the user at different associated positions. This provides for a variety of different control signals being generated by the same input device dependent on the input gestures made by the user.

In one embodiment, the input device is operable to generate a plurality of control signals in response to the user touching the input device at at least two different locations along its length. Accordingly, multiple control signals may be simultaneously generated by the input device due to the user touching the input device at a plurality of locations. Again, this provides for a variety of different input gestures to be performed.

In one embodiment, the user equipment comprises opposing major surfaces spaced apart by minor surfaces, the display screen being positioned on at least one of the major surfaces and the input device is positioned towards at least one of the minor surfaces. Accordingly, the input device may be located towards a minor surface or side of the user equipment, such as on the beznet.

In one embodiment, the user equipment comprises opposing major surfaces spaced apart by minor surfaces, the display screen being positioned on at least one of the major surfaces and the input device is positioned at an edge defined by at least one of the major surfaces and at least one of the minor surfaces. Accordingly, the input device may be located along an edge or corner between the major and minor surfaces, or between the front and the sides of the user equipment. Positioning the input device at the edge enables the user to hold the user equipment without inadvertently utilising the input device. However, the input device can easily be interacted with by simply sliding a finger towards the edge, which can be easily felt and located by the user even in low-light conditions.

In one embodiment, the user equipment comprises opposing major surfaces spaced apart by minor surfaces, the display screen being positioned on at least one of the major surfaces and the input device is located on at least one of the minor surfaces.

In one embodiment, the user equipment comprises a plurality of the input devices, each positioned in a different location on the user equipment. By providing a plurality of input devices, the range of gestures and interactions is increased.

In one embodiment, at least two of the plurality are positioned at opposing locations of at least one of the major surfaces. This arrangement enables both hands or opposing digits to perform gestures and interactions.

In one embodiment, the user equipment comprises elongate illumination proximate to each input device which is operable to illuminate to indicate the input device. Providing illumination helps to identify the location of the associated input device.

In one embodiment, the elongate illumination is operable to illuminate to indicate when the input device is active. Accordingly, the illumination may indicate when user interaction is possible with the input device.

In one embodiment, the elongate illumination is operable to illuminate to indicate when the different portions of the input device are active. Accordingly, the illumination may indicate that different portions or sections of the input device are able to receive user input and different generate control signals.

In one embodiment, the elongate illumination remains non-illuminated to indicate when the different portions of the input device are inactive.

In one embodiment, each portion of the input device is configured to generate different control signals for controlling the software application.

In one embodiment, the elongate illumination is operable to illuminate in response to an interaction between the input device and the user proximate to a position of the input device being interacted with. Accordingly, the illumination may indicate when it is detected that the user is interacting with the input device in order to provide positive feedback to the user.

Existing devices have tried numerous approaches to provide an interface to enable users to interact with the on-screen data. Most Smart phones implement scrolling by a "point and move" gesture where the user places their finger on the screen, then they move it in the direction that they want the underlying graphics to move. The graphics follow the finger, revealing new information at the edges where the finger is moved away from. The drawback of this approach is evident when scrolling through long lists of data; the gesture must be repeated many times, as it only scrolls one screen at a time. To mitigate this problem, a physics-based scroll algorithm is often implemented which lets the user move their finger in one direction quickly and then lift the finger whilst it is still moving; the graphics will keep the momentum and direction of movement it had when the finger was lifted, gently slowing down, as if overcoming a physical resistance, but even this approach has drawbacks: it is not precise, as users accelerate the scroll they cannot know exactly where it will come to rest; it is still time-consuming for long lists where the data scrolls past onscreen whilst the user waits to arrive at the desired point in the list. This approach works much like the arrow keys and page-up, page-down keys on a computer keyboard. Various different track pads, track balls or scroll wheels have been provided, each of which have similar usability problems. A recent development is to control the level of zoom by using a built in front-facing camera and distance sensors to determine the proximity of the user's face from the display and then to zoom the display as the user moves the Smart phone. However, each of these approaches has limitations.

In one embodiment, the elongate illumination is operable to illuminate a trough portion representing a trough of a scroll bar and the elongate illumination is operable to illuminate bar portion representing a bar of the scroll bar. Accordingly, the input device maybe operated as a scroll bar to provide for enhanced scrolling.

In one embodiment, the elongate illumination is operable to illuminate the bar portion having a size representing size of the bar of the scroll bar. Accordingly, an indication of the amount of the proportion of the total amount of data which is shown on the display screen may be indicated to the user in a similar manner to a conventional scroll bar.

In one embodiment, the elongate illumination is operable to illuminate with a first colour and to illuminate with a second colour in response to an interaction. Again, this provides for enhanced feedback to the user.

In one embodiment, the input devices are operable to generate at least one of scroll, zoom, shutter release and power control signals in response to a corresponding interaction. Hence, these and other gestures may readily be performed using the input devices.

According to a second aspect, there is provided a user equipment method, comprising: providing an elongate, touch-sensitive input device positioned away from a display screen of the user equipment; and generating control signals for controlling the software application in response to an interaction between the input device and a user.

In one embodiment, the interaction comprises the user touching the input device.

In one embodiment, the step of generating comprises generating the control signals in response to the user touching the input device along its length.

In one embodiment, the step of generating comprises generating a plurality of control signals in response to the user touching the input device at a corresponding plurality of different locations along its length.

In one embodiment, the step of generating comprises generating a plurality of control signals in response to the user touching the input device at at least two different locations along its length.

In one embodiment, the user equipment comprises opposing major surfaces spaced apart by minor surfaces, the display screen being positioned on at least one of the major surfaces and the input device is positioned towards at least one of the minor surfaces.

In one embodiment, the user equipment comprises opposing major surfaces spaced apart by minor surfaces, the display screen being positioned on at least one of the major surfaces and the input device is positioned at an edge defined by at least one of the major surfaces and at least one of the minor surfaces.

In one embodiment, the user equipment comprises opposing major surfaces spaced apart by minor surfaces, the display screen being positioned on at least one of the major surfaces and the input device is located on at least one of the minor surfaces.

In one embodiment, the user equipment comprises a plurality of the input devices, each positioned in a different location on the user equipment.

In one embodiment, at least two of the plurality are positioned at opposing locations of at least one of the major surfaces.

In one embodiment, the method comprises illuminating the input device using elongate illumination proximate to each input device.

In one embodiment, the step of illuminating comprises illuminating to indicate when the input device is active.

In one embodiment, the step of illuminating comprises illuminating to indicate when the different portions of the input device are active.

In one embodiment, the method comprises causing the elongate illumination to remains non-illuminated to indicate when the different portions of the input device are inactive.

In one embodiment, the step of generating comprises generating different control signals for controlling the software application using each portion of the input device.

In one embodiment, the method comprises illuminating the elongate illumination in response to an interaction between the input device and the user proximate to a position of the input device being interacted with.

In one embodiment, the method comprises illuminating a trough portion of the elongate illumination to represent a trough of a scroll bar and a bar portion of the elongate illumination to represent a bar of the scroll bar.

In one embodiment, the method comprises illuminating the bar portion having a size representing size of the bar of the scroll bar.

In one embodiment, the method comprises illuminating the elongate illumination with a first colour and to illuminate with a second colour in response to an interaction.

In one embodiment, the method comprises generating at least one of scroll, zoom, shutter release and power control signals in response to a corresponding interaction with the wherein the input devices.

According to a third aspect, there is provided a computer program product operable, when executed on a computer to perform the method steps of the second aspect.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:

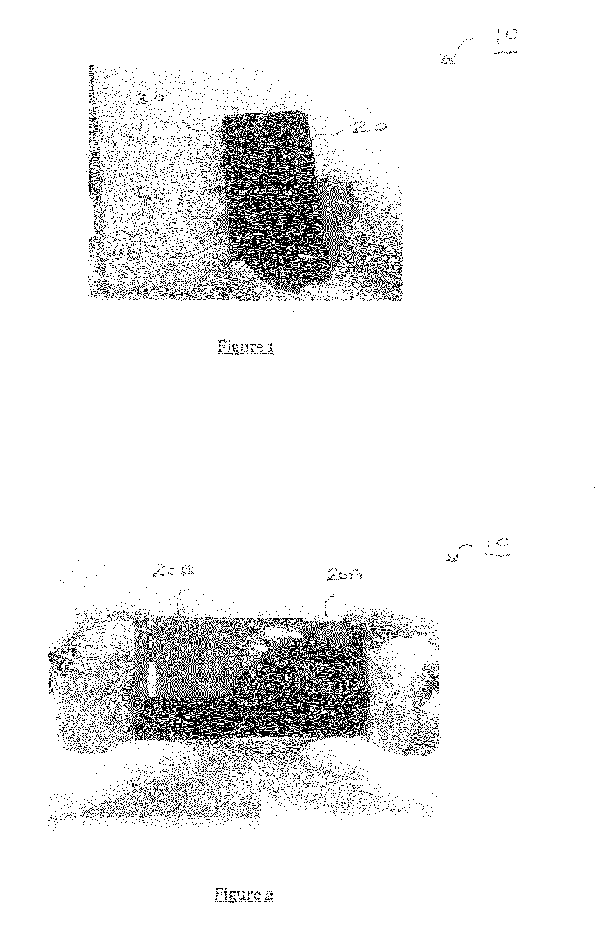

Figures 1 to 5 illustrate a user device according to embodiments.

### DESCRIPTION OF THE EMBODIMENTS

### Overview

Before discussing the embodiments in any more detail, first an overview will be provided. As mentioned above, some existing user equipment utilise touch-screens which provide for new ways for users to interact with the user equipment through use of taps, swipes, gestures, pinches and double taps and to generate control signals to cause software applications to accomplish different tasks. However, this approach requires that the application should reserve precious screen area for widgets that the user can interact with or the user must place their fingers directly on top of the onscreen information being interacted with, which obscures the view of this information.

Accordingly, embodiments provide a technique which enables many of these interactions to be performed whilst reducing or preventing obstruction of the screen, by placing a touch-responsive or touch-sensitive input device on a surface of the user equipment which is located away from the display screen. For example, the input device maybe located on an edge of the user equipment and/or on a surface connecting the front and back of the user equipment. In other embodiments, the input device may be located on the beznet assembly surrounding the display screen or even on the rear surface of the user device. In embodiments, a plurality of these touch-responsive or touch-sensitive input devices are provided, each positioned at different locations on the user equipment. Individual portions of the input devices may illuminate to indicate when the input device or that portion of the input device is active and responsive to touch input. Also, that portion of the input device which is responding to a touch may also illuminate to provide positive feedback to the user that the user's interactions are being recognised. The arrangement of such input devices provides for significant flexibility over the range of user inputs which can be made, all of which can easily be effected by the user without needing to utilise any of the display screen. As such, this technique can be utilised by user equipment such as Smart phones, e-book readers, tablets or any other device with a screen.

### Scroll Bar

Figure 1 illustrates user equipment 10 according to one embodiment having a touch sensor 20 located at an edge or corner coupling the major (front) surface 30 on which a display 40 is located with the minor surface 50 or sides of the device which couples the front surface 30 with the rear surface. In this embodiment, the touch sensor 20 is configured as a scroll bar. By providing the edge with a touch-responsive input device, the user interface of the user equipment 10 can provide a proportional input mechanism similar to Windows scroll bars present in most computing interfaces. By sliding a finger up or down the edge, the user can quickly scroll through a long list of contacts, where the position of the finger on the edge corresponds to the position a bar would have in the trough of a conventional scroll bar interface.

In this embodiment, illumination is also provided to the edge to provide visual feedback. For example, the illumination colour may indicate to the user that the edge is currently configured as a scroll bar. The entire edge provides a functional area that corresponds to a scroll bar in a desktop environment. By sliding a thumb up and down the edge, positions in a long list of elements can be selected directly without having to leaf through intermediate pages. Visual feedback can be provided by illuminating the area under the thumb and the length of the list can be indicated by the width of the illuminated area (as with the size of the bar in a scroll bar).

### Photo Mode

Figure 2 illustrates the user equipment 10 where, in this embodiment, the touch sensor 20 is reconfigured for a photo or camera mode. Many Smart phones include a physical button on the side of the Smart phone for shutter operation when taking a photo. In this embodiment, the touch sensor 20 replaces the need for a separate switch. Instead, a portion 20A of the touch sensor 20 is configured to act as a shutter which may be activated by a single press, and another portion 20B is configured to operate as a zoom by sliding a finger along the portion 20B. The portions 20A and 20B may be illuminated with different colours (in this example, blue for the area 20A and red for the area 20B) in order to distinguish between the two functional areas. As with the scroll bar example mentioned above, the actual position of the finger within the zoom area may be indicated by illuminating the region beneath the finger typically in a different colour.

### Simultaneous Gesturing

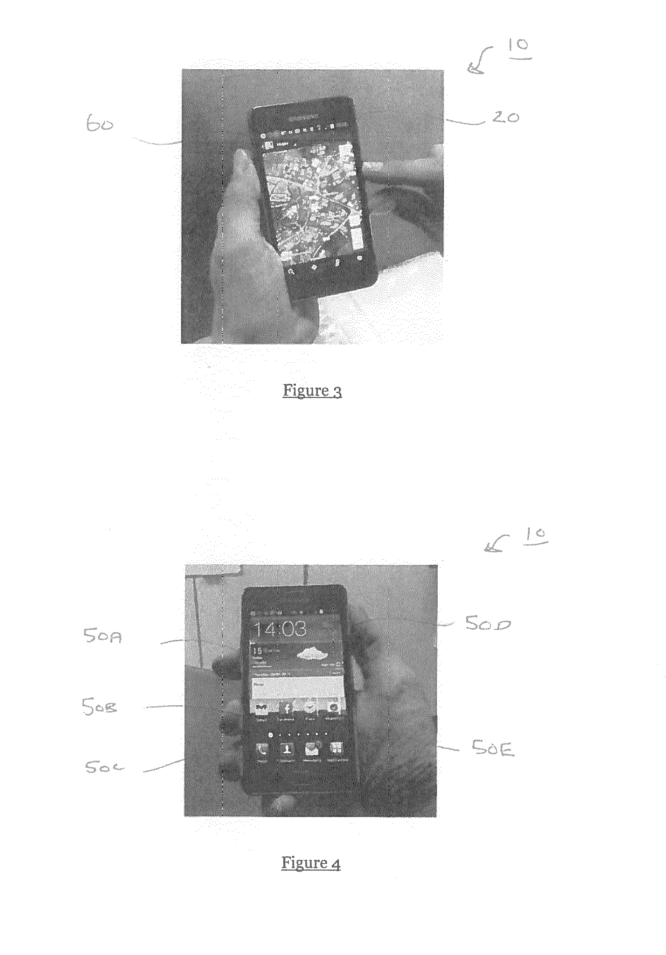

Figure 3 illustrates the user equipment 10 where, in this embodiment, the touch sensor 20 is reconfigured to detect multi-touch gestures such as "pinching". With such an arrangement, the touch sensor 20 is configured to detect multiple simultaneous contacts to perform more elaborate gestures. For example, Figure 3 shows the start of a "pinch" gesture that can be made in order to perform the same zooming functions as pinch gestures commonly do when performed on the display of current Smart phone applications.

Alternatively, zooming can be made even easier. Considering Figure 3, the edge which opposes the edge containing the touch sensor 20 also contains a touch sensor 60. The position of the left-hand thumb on that touch sensor 60 can be used to change the configuration of the touch sensor 20. For example, the position of the left-hand thumb on the touch sensor 60 may change the configuration of the touch sensor 20 to be in zoom mode and, when in another position, may change the configuration of the touch sensor 20 to be in scroll mode. Moving the left thumb to yet another position on the touch sensor 60 switches the touch sensor 20 to be in horizontal zoom mode. Thus, the user can rapidly switch between these modes by moving the left thumb slightly on the touch sensor 60 whilst zooming or scrolling respectively by moving a single finger up and down the touch sensor 20. Thus, with the arrangement shown in Figure 3, a user can quickly scroll to the desired section of a map and then zoom in. Again, different areas of the touch sensors 20, 60 may be illuminated with different colours to indicate the different mode selections and the position of the fingers.

### Handed Determination

Figure 4 illustrates the arrangement of the user equipment 10 having the touch sensors 20, 60. The user equipment 10 may be configured to detect the contact pattern for a right-handed or a left-handed user (the illuminations 50A to 50E indicate a typical contact pattern for a right-handed user). The user equipment 10 may automatically detect from these contact patters whether a user is right or left handed. This can assist in user interface accessibility settings or transmission settings where, for example, certain Smart phones have been shown to have significantly lower antenna signal for left-handed users than for their right-handed counterparts.

### Power Off

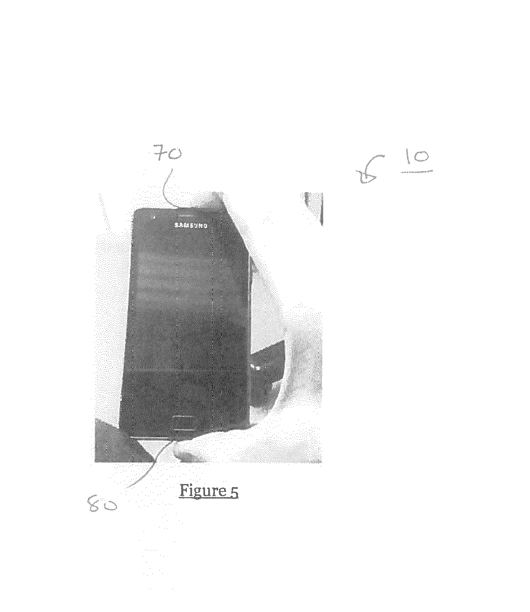

Figure 5 illustrates the arrangement of the user equipment 10 having further touch sensors 70, 80. By having these additional sensors 70, 80, a wide range of gestures can be used to invoke pre-programmed actions. For example, Figure 5 shows an example of a shutdown gesture and the use of the additional sensors 70, 80 makes a wide range of easily-remembered gestures possible. Again, the active portions of the sensors 70, 80 may be illuminated, as may the contact positions of the fingers on these edges.

It will be appreciated that using multiple touch-sensitive sensors enables the prevention of accidental gestures by requiring multiple simultaneous contact points to be activated at the same time. For example, in Figure 3, the pinch works only if the user's thumb has contact at the upper part of the opposite edge, whilst in Figure 5 the shutdown gesture requires simultaneous contact both at the top edge and the bottom edge. Such control can also be used to control the face proximity method described above; for example, by allowing the user to move the Smart phone without activating the zoom and then rapidly re-enabling this by a slight movement of the thumb.

Accordingly it can be seen that embodiments provide techniques to enable users to interact with user equipment and to perform a variety of gestures without obscuring the screen with fingers or taking up screen real estate with graphical widgets. The complexity of physical buttons or scroll wheels on the side of user equipment can be avoided, as these can be replaced by touch-sensitive edges that can be dynamically configured to act as buttons or scroll wheels in the same way that touch-screens replaced physical keyboards with virtual onscreen keyboards. This approach provides a new way for interacting with user equipment, frees up screen real estate and opens up a range of new options for user equipment customisation (both manual and automatic) and can remove the need for most physical buttons on the device.

Although the embodiments described above are provided with touch-sensitive edges, it will be appreciated that any portion of the device, such as the sides of the device or even the rear of the device, could be provisioned with touch-sensitive devices.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/ or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. User equipment operable to execute a software application, said user equipment comprising:
an elongate, touch-sensitive input device positioned away from a display screen of said user equipment, said input device being operable to generate control signals for controlling said software application in response to an interaction between said input device and a user.

2. The user equipment of claim 1, wherein said input device is operable to generate at least one of: plurality of control signals in response to said user touching said input device at a corresponding plurality of different locations along its length; and a plurality of control signals in response to said user touching said input device at at least two different locations along its length.

3. The user equipment of claim 1 or 2, wherein said user equipment comprises opposing major surfaces spaced apart by minor surfaces, said display screen being positioned on at least one of said major surfaces and said input device is positioned towards at least one of said minor surfaces.

4. The user equipment of any preceding claim, wherein said user equipment comprises opposing major surfaces spaced apart by minor surfaces, said display screen being positioned on at least one of said major surfaces and said input device is positioned at an edge defined by at least one of said major surfaces and at least one of said minor surfaces.

5. The user equipment of any preceding claim, wherein said user equipment comprises opposing major surfaces spaced apart by minor surfaces, said display screen being positioned on at least one of said major surfaces and said input device is located on at least one of said minor surfaces.

6. The user equipment of any preceding claim, comprising a plurality of said input devices, each positioned in a different location on said user equipment.

7. The user equipment of claim 6, wherein at least two of said plurality of said input devices are positioned at opposing locations of at least one of said major surfaces.

8. The user equipment of any preceding claim, comprising elongate illumination proximate to each input device which is operable to illuminate to indicate said input device.

9. The user equipment of claim 8, wherein said elongate illumination is operable to illuminate to indicate at least one of: when said input device is active; and when said different portions of said input device are active.

10. The user equipment of any preceding claim, wherein each portion of said input device is configured to generate different control signals for controlling said software application.

11. The user equipment of any one of claims 8 to 10, wherein said elongate illumination is operable to illuminate in response to an interaction between said input device and said user proximate to a position of said input device being interacted with.

12. The user equipment of any one of claims 8 to 11, wherein said elongate illumination is operable to illuminate a trough portion representing a trough of a scroll bar and said elongate illumination is operable to illuminate bar portion representing a bar of said scroll bar.

13. The user equipment of any one of claims 8 to 12, wherein said elongate illumination is operable to illuminate said bar portion having a size representing size of said bar of said scroll bar.

14. The user equipment of any one of claims 8 to 13, wherein said elongate illumination is operable to illuminate with a first colour and to illuminate with a second colour in response to an interaction.

15. A user equipment method, comprising:
providing an elongate, touch-sensitive input device positioned away from a display screen of said user equipment; and
generating control signals for controlling said software application in response to an interaction between said input device and a user.

## Amended claims

### Amended claims in accordance with Rule 137(2) EPC.

**1.** User equipment (10) operable to execute a software application, said user equipment comprising:
a plurality of input devices comprising an elongate, touch-sensitive input device (20) positioned away from a display screen of said user equipment, said input device being operable to generate control signals for controlling said software application in response to an interaction between said input device and a user; and
at least one further input device (50, 60, 70, 80), said plurality of input device (20, 50, 60, 70, 80) each being positioned in a different location on said user equipment;
said user equipment comprising opposing major surfaces spaced apart by minor surfaces, said display screen being positioned on at least one of said major surfaces and at least a subset of said plurality of input devices being located on said minor surfaces; wherein
said at least a subset of said plurality of input devices comprise touch-sensitive input devices; and
user equipment (10) is configured to detect a contact pattern of a user hand holding said user equipment and to determine from said contact pattern whether said user is a left-handed or a right-handed user, said user equipment being configured in response to detecting said contact pattern to select at least one of user interface accessibility and transmission settings appropriate for either said detected left-handed or right-handed user.

**2.** The user equipment of claim 1, wherein said input device is operable to generate at least one of: plurality of control signals in response to said user touching said input device at a corresponding plurality of different locations along its length; and a plurality of control signals in response to said user touching said input device at at least two different locations along its length.

**3.** The user equipment of claim 1 or 2, wherein at least one of said input devices is positioned towards at least one of said minor surfaces.

**4.** The user equipment of any preceding claim, wherein at least one of said input devices is positioned at an edge defined by at least one of said major surfaces and at least one of said minor surfaces.

**5.** The user equipment of any preceding claim, wherein at least two of said plurality of said input devices are positioned at opposing locations of at least one of said major surfaces.

**6.** The user equipment of any preceding claim, comprising elongate illumination proximate to each input device which is operable to illuminate to indicate said input device.

**7.** The user equipment of claim 6, wherein said elongate illumination is operable to illuminate to indicate at least one of: when said input devices is active; and when said different portions of said input device are active.

**8.** The user equipment of any preceding claim, wherein each portion of said input device is configured to generate different control signals for controlling said software application.

**9.** The user equipment of any one of claims 6 to 8, wherein said elongate illumination is operable to illuminate in response to an interaction between said input device and said user proximate to a position of said input devices being interacted with.

**10.** The user equipment of any one of claims 6 to 9, wherein said elongate illumination is operable to illuminate a trough portion representing a trough of a scroll bar and said elongate illumination is operable to illuminate bar portion representing a bar of said scroll bar.

**11.** The user equipment of any one of claims 6 to 10, wherein said elongate illumination is operable to illuminate said bar portion having a size representing size of said bar of said scroll bar.

**12.** The user equipment of any one of claims 6 to 11, wherein said elongate illumination is operable to illuminate with a first colour and to illuminate with a second colour in response to an interaction.

**13.** A user equipment method, performed by a user equipment (10), said user equipment comprising:
a plurality of input devices including an elongate, touch-sensitive input device (20) positioned away from a display screen of said user equipment and at least one further input device (50, 60, 70, 80), said plurality of input devices each being positioned in a different location on said user equipment; and
opposing major surfaces spaced apart by minor surfaces, said display screen being positioned on at least one of said major surfaces and at least a subset of said plurality of input devices being provided on said minor surfaces;
said at least a subset of said plurality of input devices being touch-sensitive input devices; and said method comprising generating control signals for controlling a software application in response to an interaction between at least one of said input devices and a user; and
detecting a contact pattern of a user hand holding said user equipment and determining from said contact pattern whether said user is a left-handed or a right-handed user; and
in response to detecting said contact pattern, selecting at least one of user interface accessibility and transmission settings appropriate for either said detected left-handed or right-handed user.
